# EUROPÄISCHE PATENTSCHRIFT

(11) **EP 1 842 637 B1**
(45) Veröffentlichungstag und Bekanntmachung des Hinweises auf die Patenterteilung: **11.06.2008**
(21) Anmeldenummer: 06007098.4
(22) Anmeldetag: 04.04.2006
(51) Int. Cl.: B27F 1/02, B27B 25/04, B27B 25/06, B65G 15/32, B27D 5/00, B65G 21/20, B23Q 3/00, B23Q 7/03

(54) **Durchlaufmaschine mit Werkstückstützvorrichtung**
Pass-through machine with workpiece supporting device
Machine pour le traitement en continu avec dispositif de support de pièces à usiner

(43) Veröffentlichungstag der Anmeldung: 10.10.2007
(73) Patentinhaber: Homag Holzbearbeitungssysteme AG, 72296 Schopfloch (DE)
(72) Erfinder: Gauß, Achim, 72280 Dornstetten/Hallwangen (DE); Rathgeber, Peter, 72280 Dornstetten (DE)
(74) Vertreter: HOFFMANN EITLE

(56) Entgegenhaltungen:
- EP-A- 1 153 714
- WO-A-20/04113037
- DE-A1- 10 253 097
- DE-U1- 20 107 487
- US-A- 5 617 910

## Beschreibung

### Technisches Gebiet

Die Erfindung betrifft eine Durchlaufmaschine zum Bearbeiten plattenförmiger Werkstücke, die bevorzugt zumindest teilweise aus Holz, Holzwerkstoffen oder dergleichen bestehen, nach dem Oberbegriff von Anspruch 1.

### Stand der Technik

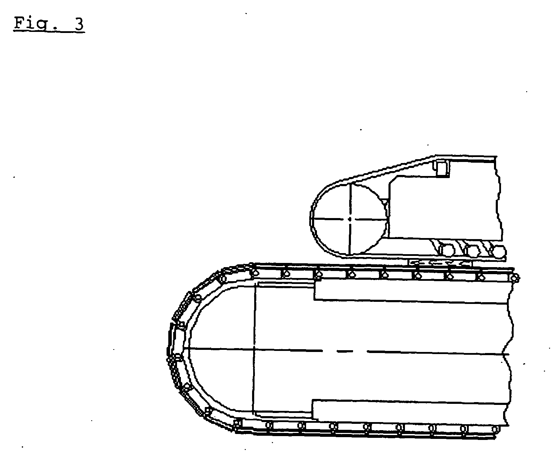

Eine der Anmelderin bekannte Vorrichtung der eingangs genannten Art ist in Fig. 3 schematisch in einer teilweisen Seitenansicht dargestellt. Fig. 3 zeigt eine Durchlaufmaschine mit einem Oberdruck (Werkstückstützvorrichtung) und einem Förderband, zwischen denen ein Einspann- bzw. Förderspalt für die zu bearbeitenden plattenförmigen Werkstücke definiert ist. Der Oberdruck besitzt einen endlos umlaufenden Riemen und eine feststehende Führungsvorrichtung mit zwei Umlenkrädern, an denen der Riemen umgelenkt wird. Zwischen den Umlenkrädern wird der Riemen durch Stützrollen geführt, die über Schwenkhebel federnd gelagert sind, damit sich die Position des Riemens an veränderliche Werkstückdicken oder -toleranzen anpasst.

Allerdings hat sich gezeigt, dass die Konstruktion des bekannten Oberdrucks durch die Vielzahl federnd gelagerter Bauteile vergleichsweise kompliziert ist. Auch sind bewegliche Bauteile stets verschmutzungsanfällig, was insbesondere bei der spanenden Bearbeitung von Werkstücken von Nachteil ist.

Ferner offenbart die DE 201 07 487 U1 eine gattungsgemäße Durchlaufmaschine.

### Darstellung der Erfindung

Es ist Aufgabe der vorliegenden Erfindung, eine Durchlaufmaschine der eingangs genannten Art bereitzustellen, die an veränderliche Werkstückdicken oder -toleranzen anpassbar ist und dennoch eine einfache Konstruktion besitzt und weniger verschmutzungsanfällig ist.

Diese Aufgabe wird erfindungsgemäß durch eine Durchlaufmaschine mit den Merkmalen von Anspruch 1 gelöst. Besonders vorteilhafte Weiterbildungen der Erfindung sind in den abhängigen Ansprüchen angegeben.

Der Erfindung liegt der Gedanke zugrunde, die Anpassungsfähigkeit des Riemens an veränderliche Werkstückdicken oder -toleranzen nicht (nur) durch aufwändige Lagerungskonstruktionen, sondern durch die Ausgestaltung des Riemens zu erzeugen. Zu diesem Zweck ist erfindungsgemäß vorgesehen, dass der Riemen mehrere sich in Riemenlängsrichtung erstreckende Schichten aufweist, wobei zumindest eine der Schichten als nachgiebige Schicht ausgebildet ist, die zumindest in Riemenquerrichtung eine geringere Steifigkeit besitzt als mindestens eine andere der Schichten.

Durch seinen mehrschichtigen Aufbau mit gestaffelter Steifigkeit bzw. Nachgiebigkeit kann sich der Riemen gut an die jeweiligen Abmessungen der Werkstücke anpassen, so dass auf die federnd gelagerten Führungsbauteile des Riemens ggf. vollständig verzichtet werden kann. Hierdurch vereinfacht sich die Konstruktion der erfindungsgemäßen Durchlaufmaschine drastisch, während sie gleichzeitig weniger verschmutzungsanfällig und somit langlebiger ist. Darüber hinaus erhält man eine gleichmäßigere (weniger punktuelle) Krafteinleitung auf die Werkstücke, so dass die Werkstücke besonders stabil geführt werden.

Im Rahmen der vorliegenden Erfindung können unterschiedlichste Materialien für die mindestens eine nachgiebige Schicht verwendet werden. Gemäß einer Weiterbildung der vorliegenden Erfindung ist jedoch vorgesehen, dass die mindestens eine nachgiebige Schicht ein aufgeschäumtes Material aufweist. Hierdurch lässt sich die Nachgiebigkeit des Materials leicht an die jeweiligen Anforderungen anpassen. Dabei hat es sich als besonders vorteilhaft erwiesen, ein aufgeschäumtes Kunststoffmaterial zu verwenden. Diese aufgeschäumten Materialien sind trotz ihrer Nachgiebigkeit sehr robust und dauerhaft, sodass sie sich besonders für den Einsatz im Bereich der Bearbeitung plattenförmiger Werkstücke eignen.

Die absolute Nachgiebigkeit bzw. Steifigkeit der mindestens einen nachgiebigen Schicht ist im Rahmen der vorliegenden Erfindung nicht besonders beschränkt, wobei die Steifigkeit beispielsweise als statischer Elastizitätsmodul nach DIN 53515 bei statischer Dauerlast gemessen werden kann.

Ferner kann die Gesamtnachgiebigkeit der mindestens einen nachgiebigen Schicht nicht nur durch die Materialauswahl, sondern auch durch die Abmessungen derselben gesteuert werden. Vor diesem Hintergrund ist gemäß einer Weiterbildung der vorliegenden Erfindung vorgesehen, dass die mindestens eine nachgiebige Schicht eine größere Dicke besitzt als die übrigen Schichten, d.h. als jede der übrigen Schichten.

Obgleich die mindestens eine nachgiebige Schicht bereits alleine eine hohe Dauerhaftigkeit und Widerstandsfähigkeit besitzen kann, kann es bei manchen Anwendungen sinnvoll sein, die mindestens eine nachgiebige. Schicht zusätzlich vor Beschädigungen zu schützen. Zu diesem Zweck ist gemäß einer Weiterbildung der Erfindung vorgesehen, dass der Riemen mindestens eine Deckschicht, insbesondere eine Folie und/oder ein Gießhaut aufweist. Hierdurch kann die Dauerhaftigkeit des Riemens mit geringem Aufwand weiter gesteigert werden, ohne dass dessen Anpassungsfähigkeit spürbar beeinträchtigt wird.

Die übrigen Schichten des Riemens der erfindungsgemäßen Durchlaufmaschine könnten beispielsweise durch einen herkömmlichen Förderriemen oder Zahnriemen gebildet sein. Dabei ist gemäß einer Weiterbildung der Erfindung vorgesehen, dass der Riemen mindestens einen Basisriemen aus einem in Riemenlängsrichtung mit Corden bewehrten Material, insbesondere Gummimaterial, aufweist. Derartige Verbundriemen sind extrem belastbar und dauerhaft und lassen sich gut zusammen mit der oben diskutierten, nachgiebigen Schicht verarbeiten.

Der Riemen kann an der Führungsvorrichtung prinzipiell auf unterschiedlichste Art und Weise geführt werden, wobei die Führungsvorrichtung unter Umständen auch lediglich durch zwei oder mehr Umlenkelemente wie Umlenkräder gebildet sein kann. Insbesondere bei langgestreckten Werkstückstützvorrichtungen hat es sich jedoch als vorteilhaft erweisen, zwischen den Umlenkelementen zusätzliche Führungselemente vorzusehen, die den Riemen stabilisieren. Dabei ist gemäß einer Weiterbildung der Erfindung vorgesehen, dass die Führungsvorrichtung eine Führungsschiene mit einer formschlüssig an den jeweiligen Riemen angepassten Laufrinne besitzt, die einen Boden aufweist, in welchem mit einer Druckluftquelle verbundene Luftauslassöffnungen angeordnet sind. Hierdurch können Reibungskräfte zwischen dem Riemen und der Führungsvorrichtung fast vollständig eliminiert werden, wodurch extrem hohe Umlaufgeschwindigkeiten des Riemens ermöglicht werden. Dies führt dazu, dass die Werkstückstützvorrichtung beispielsweise in Durchlaufmaschinen eingesetzt werden kann, die eine Fördergeschwindigkeit von bis zu 200 m/min oder mehr aufweisen.

Eine derartige Durchlaufmaschine ist Gegenstand der abhängigen Ansprüche 7 bis 11, die besonders vorteilhafte Anwendungsfälle definieren. Dabei können als Fördervorrichtung unterschiedlichste Konstruktionen zum Einsatz kommen, wie beispielsweise herkömmliche Riemen- oder Kettenförderer, wobei die Riemen beispielsweise auf einem Luftkissen gleiten können, oder die Ketten beispielsweise unter Einsatz von Magnetkräften geführt werden. Ebenso kann die Fördervorrichtung im Rahmen der vorliegenden Erfindung lediglich als Gleiteinrichtung mit einer Gleitfläche aufweisen, in der zumindest abschnittsweise Luftaustrittsöffnungen angeordnet sind, wobei der Riemen in diesem Falle antreibbar ist.

### Kurze Beschreibung der Zeichnungen

- Fig. 1: zeigt schematisch eine Seitenansicht und eine Schnittansicht einer Durchlaufmaschine als bevorzugte Ausführungsform der vorliegenden Erfindung;
- Fig. 2: zeigt schematisch eine Schnittansicht des Riemens der in Fig. 1 gezeigten Durchlaufmaschine;
- Fig. 3: zeigt schematisch eine Seitenansicht einer bekannten Durchlaufmaschine.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

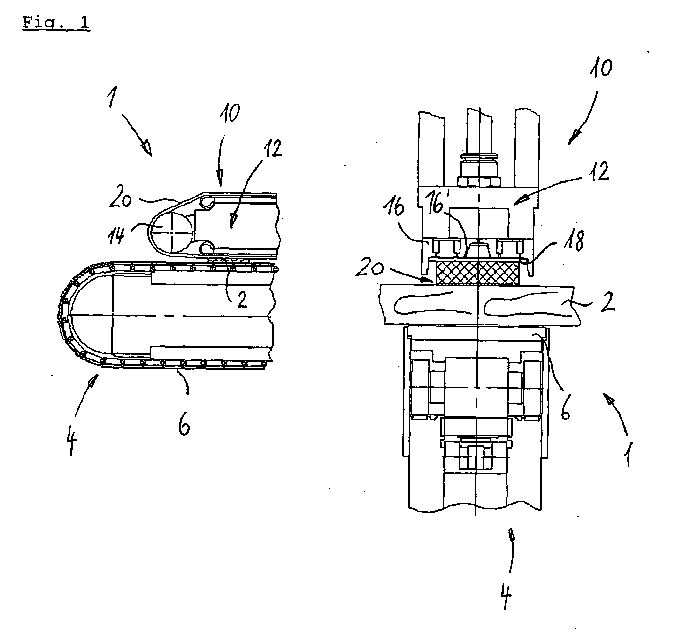

Eine Durchlaufmaschine 1 mit einer Werkstückstützvorrichtung 10 als bevorzugte Ausführungsform der vorliegenden Erfindung ist in Fig. 1 schematisch in einer Seitenansicht und einer Schnittansicht dargestellt. Die Durchlaufmaschine 1 dient zum Bearbeiten plattenförmiger Werkstücke 2, die zumindest teilweise aus Holz, Holwerkstoffen, Kunststoffen, sonstigen Verbundwerkstoffen oder dergleichen bestehen und im Bereich des Möbel- und Küchenbaus breite Anwendung finden.

Die Werkstückstützvorrichtung 10 ist in der vorliegenden Ausführungsform als so genannter Oberdruck ausgebildet, kann jedoch prinzipiell eine beliebige Lage einnehmen und auch selbst als Fördereinrichtung eingesetzt werden, beispielsweise in Kombination mit einem bekannten oder erfindungsgemäßen Oberdruck. Die Werkstückstützvorrichtung 10 besitzt eine Führungsvorrichtung 12, die zwei Umlenkräder 14 (von denen in Fig. 1 nur eines gezeigt ist) aufweist, um die ein Riemen 20 endlos umlaufend herumgeführt ist.

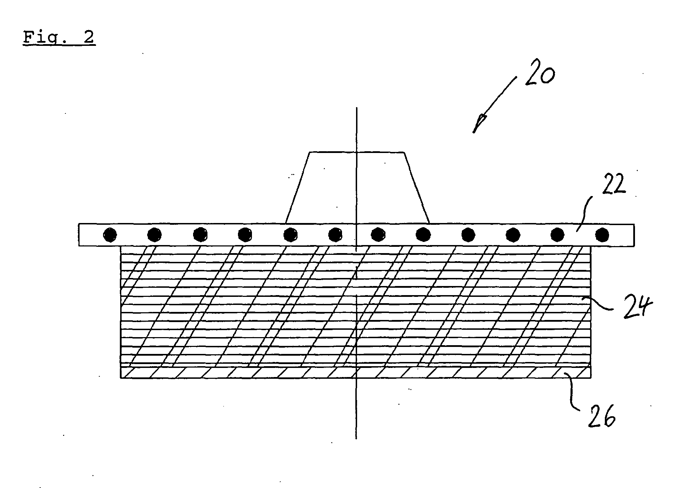

Wie in Fig. 2 am besten zu erkennen ist, besitzt der Riemen 20 in der vorliegenden Ausführungsform 30 drei sich in Riemenlängsrichtung (orthogonal zur Zeichenebene in Fig. 2) erstreckende Schichten 22, 24, 26. Von diesen Schichten ist in der vorliegenden Ausführungsform die mittlere Schicht 24 als nachgiebige Schicht ausgebildet, welche in Riemenquerrichtung (d.h. zumindest von oben nach unten in Fig. 2) eine geringere Steifigkeit besitzt als jedenfalls die obere Schicht 22, auf die untenstehend noch näher eingegangen wird.

Die nachgiebige Schicht 24 ist in der vorliegenden Ausführungsform durch ein aufgeschäumtes Material gebildet, und zwar ein Kunststoff-Schaum. Wie in Fig. 2 zu erkennen ist, besitzt die nachgiebige Schicht 24 eine deutlich größere Dicke (gemessen von oben nach unten in Fig. 2) als die beiden anderen Schichten 22 und 24.

Auf der dem Werkstück 2 zugewandten Seite der nachgiebigen Schicht 24 ist ferner eine Deckschicht 26 vorgesehen, die in der vorliegenden Ausführungsform durch eine Folie gebildet ist, aber auch andersartig ausgestaltet sein kann, beispielsweise als Gießhaut.

Auf der vom Werkstück 2 abgewandten Seite der nachgiebigen Schicht 24 ist darüber hinaus ein Basisriemen 22 vorgesehen, der aus einem Gummimaterial besteht, das in Riemenlängsrichtung (orthogonal zur Zeichenebene in Fig. 2) mit Corden bewehrt ist, wie dies im Bereich der Zahnriemen bekannt ist.

Die Führungsvorrichtung 12 weist in der vorliegenden Ausführungsform neben den Umlenkrädern 14 eine Laufrinne 16 auf, in welcher der Riemen 20 formschlüssig geführt ist. Der Boden 16' der Laufrinne ist in der vorliegenden Ausführungsform mit Luftauslassöffnungen 18 ausgestattet, die mit einer Druckluftquelle verbindbar sind. Auf diese Weise kann zwischen dem Boden 16' der Laufrinne 16 und dem Riemen 20 ein Luftkissen erzeugt werden, wodurch die Reibung in diesem Bereich vermindert oder praktisch eliminiert werden kann.

Unterhalb der Werkstückstützvorrichtung 10 ist ferner eine Fördervorrichtung 4 vorgesehen, die in der vorliegenden Ausführungsform eine endlos umlaufende Transportkette 6 aufweist. Zwischen der Transportkette 6 und dem Förderriemen 20 ist ein Förderspalt definiert, durch welchen die plattenförmigen Werkstücke 2 gefördert werden. Dabei werden die plattenförmigen Werkstücke 2 an hier nicht näher gezeigten Bearbeitungswerkzeugen oder Bearbeitungsaggregaten vorbeigefördert.

Durch die nachgiebige Ausgestaltung des Riemens 20 können dabei plattenförmige Werkstücke mit veränderlichen Abmessungen oder Toleranzen problemlos gefördert werden, ohne dass aufwändige Mechanismen oder Einstellarbeiten erforderlich sind.

## Patentansprüche

1. Durchlaufmaschine (1) zum Bearbeiten von platten förmigen Werkstücken (2), die bevorzugt zumindest teilweise aus Holz, Holzwerkstoffen oder dergleichen bestehen, mit
mindestens einem endlos umlaufenden Riemen (20), der dazu ausgelegt ist, geförderte Werkstücke (2) zumindest abschnittsweise zu stützen,
mit einer feststehenden Führungsvorrichtung (12) für den Riemen (20), die mindestens zwei Umlenkelemente (14) aufweist, an denen der Riemen umgelenkt wird, und
mindestens einem Bearbeitungswerkzeug oder Bearbeitungsaggregat,
**dadurch gekennzeichnet, dass**
der Riemen (20) mehrere sich in Riemenlängsrichtung erstreckende Schichten (22, 24, 26) aufweist, wobei zumindest eine der Schichten als nachgiebige Schicht (24) ausgebildet ist, die zumindest in Riemenquerrichtung eine geringere Steifigkeit besitzt als mindestens eine (22) andere der Schichten.

2. Durchlaufmaschine nach Anspruch 1, **dadurch gekennzeichnet, dass** die mindestens eine nachgiebige Schicht (24) ein aufgeschäumtes Material aufweist, bevorzugt ein aufgeschäumtes Kunststoffmaterial.

3. Durchlaufmaschine nach einem der vorhergehenden Ansprüche, **dadurch gekennzeichnet, dass** die mindestens eine nachgiebige Schicht (24) eine größere Dicke besitzt als die übrigen Schichten (22, 26).

4. Durchlaufmaschine nach einem der vorhergehenden Ansprüche, **dadurch gekennzeichnet, dass** der Riemen (20) mindestens eine Deckschicht (26), insbesondere eine Folie und/oder eine Gießhaut, aufweist.

5. Durchlaufmaschine nach einem der vorhergehenden Ansprüche, **dadurch gekennzeichnet, dass** der Riemen (20) mindestens einen Basisriemen (22) aus einem in Riemenlängsrichtung mit Corden bewehrten Material, insbesondere Gummimaterial, aufweist.

6. Durchlaufmaschine nach einem der vorhergehenden Ansprüche, **dadurch gekennzeichnet, dass** die Führungsvorrichtung (12) eine Führungsschiene mit einer formschlüssig an den jeweiligen Riemen angepassten Laufrinne (16) besitzt, die einen Boden (16') aufweist, in welchem mit einer Druckluftquelle verbindbare Luftauslassöffnungen (18) angeordnet sind.

7. Durchlaufmaschine (1) nach einem der vorhergehenden Ansprüche, ferner mit
einer Fördervorrichtung (4) mit einem endlos umlaufenden Förderelement (6) oder einer Gleitfläche, wobei zwischen dem endlos umlaufenden Förderelement (6) bzw. der Gleitfläche und dem Förderriemen (20) ein Förderspalt zum Einspannen und Fördern der plattenförmigen Werkstücke (2) gebildet ist.

8. Durchlaufmaschine nach Anspruch 7, **dadurch gekennzeichnet, dass** im Bereich des Förderspaltes zumindest ein Bearbeitungswerkzeug oder Bearbeitungsaggregat angeordnet ist.

9. Durchlaufmaschine nach Anspruch 7 oder 8, **dadurch gekennzeichnet, dass** die Fördervorrichtung (4) ein Förderelement aufweist, das zumindest abschnittsweise auf einem Luftkissen geführt ist.

10. Durchlaufmaschine nach Anspruch 7 oder 8, **dadurch gekennzeichnet, dass** die Fördervorrichtung (4) ein Förderelement aufweist, das zumindest abschnittsweise durch Magnetkräfte geführt ist.

11. Durchlaufmaschine nach Anspruch 7 oder 8, **dadurch gekennzeichnet, dass** die Fördervorrichtung (4) eine Gleitfläche aufweist, in der zumindest abschnittsweise Luftaustrittsöffnungen angeordnet sind, wobei der Riemen antreibbar ist.

## Claims

1. A continuously operating machine (1) for machining panel-shaped workpieces (2) that are preferably made, at least in part, of wood, wood materials, or the like, said continuously operating machine comprising
at least one endlessly revolving belt (20) designed to support conveyed workpieces (2) at least sectionally,
a stationary guide means (12) for said belt (20), said guide means having at least two deflection members (14) on which said belt is deflected, and
at least one machining tool or machining assembly,
**characterized in that**
said belt (20) has a plurality of layers (22, 24, 26) extending in the longitudinal direction of the belt, at least one of said layers being designed as a flexible layer (24) which, at least in the transverse direction of the belt, is less rigid than at least one (22) of the other layers.

2. A continuously operating machine according to claim 1, **characterized in that** said at least one flexible layer (24) comprises a foamed material, preferably a foamed plastic material.

3. A continuously operating machine according to any one of the preceding claims, **characterized in that** said at least one flexible layer (24) has a greater thickness than said other layers (22, 26).

4. A continuously operating machine according to any one of the preceding claims, **characterized in that** said belt (20) comprises at least one cover layer (26), in particular a film and/or a casting skin.

5. A continuously operating machine according to any one of the preceding claims, **characterized in that** said belt (20) comprises at least one base belt (22) made of a material reinforced with cords in the longitudinal direction of the belt, said belt being made in particular of a rubber material.

6. A continuously operating machine according to any one of the preceding claims, **characterized in that** said guide means (12) comprises a guide rail having a groove (16) that offers form-locked adaptation to the respective belt, said groove having a base (16') in which are arranged air outlet openings (18) connectable to a compressed-air source.

7. A continuously operating machine according to any one of the preceding claims, further comprising
a conveying means (4) having an endlessly revolving conveying member (6) or a sliding surface, a conveying gap for holding and conveying said panel-shaped workpieces (2) being formed between said endlessly revolving conveying member (6) or said sliding surface and said conveyor belt (20).

8. A continuously operating machine according to claim 7, **characterized in that** at least one machining tool or machining assembly is arranged in the region of said conveying gap.

9. A continuously operating machine according to claim 7 or claim 8, **characterized in that** said conveying means (4) comprises a conveying member that is guided, at least sectionally, on an air cushion.

10. A continuously operating machine according to claim 7 or claim 8, **characterized in that** said conveying means (4) comprises a conveying member that is guided, at least sectionally, by means of magnetic forces.

11. A continuously operating machine according to claim 7 or claim 8, **characterized in that** said conveying means (4) comprises a sliding surface in which air outlet openings are arranged at least sectionally, it being possible to drive said belt of said workpiece support device.

## Revendications

1. Machine pour le traitement en continu (1), pour l'usinage de pièces d'oeuvre (2) en forme de plaques, composées, de préférence au moins partiellement de bois, de matériaux ligneux ou analogues, comprenant
au moins une courroie (20) circulant sans fin, conçue pour soutenir, au moins par tronçons, des pièces d'oeuvre (2) transportées,
avec un dispositif de guidage (12) stationnaire pour la courroie (20), présentant au moins deux éléments de renvoi (14) sur lesquels la courroie est déviée, et
au moins un outil d'usinage ou un groupe d'usinage,
**caractérisée en ce que**
la courroie (20) présente plusieurs couches (22, 24, 26) s'étendant dans la direction longitudinale de la courroie, au moins l'une des couches étant réalisée sous forme de couche déformable (24) ayant au moins dans la direction transversale de la courroie une plus faible rigidité qu'au moins une (22) autre des couches.

2. Machine pour le traitement en continu selon la revendication 1; **caractérisée en ce que** la au moins une couche (24) déformable présente un matériau rendu alvéolaire, de préférence un matériau synthétique rendu alvéolaire.

3. Machine pour le traitement en continu selon l'une des revendications précédentes, **caractérisée en ce que** la au moins une couche déformable (24) présente une épaisseur supérieure à celle des autres couches (22, 26).

4. Machine pour le traitement en continu selon l'une des revendications précédentes, **caractérisée en ce que** la courroie (20) présente au moins une couche de couverture (26), en particulier une feuille et/ou une peau de moulage.

5. Machine pour le traitement en continu selon l'une des revendications précédentes, **caractérisée en ce que** la courroie (20) présente au moins une courroie de base (22), formée d'un matériau armé avec des cordes en direction longitudinale de la courroie, en particulier un matériau de type caoutchouc.

6. Machine pour le traitement en continu selon l'une des revendications précédentes, **caractérisée en ce que** le dispositif de guidage (12) présente une glissière de guidage avec une goulotte de passage (16) adaptée, par une liaison à ajustement de formes, à la courroie respective, la goulotte de passage présentant un fond (16'), dans lequel sont disposées des ouvertures d'échappement d'air (18) susceptibles d'être reliées à une source d'air comprimé.

7. Machine pour le traitement en continu (1) selon l'une des revendications précédentes, comprenant en outre
un dispositif de transport (4) avec un élément de transport (6) circulant sans fin ou une surface de glissement, entre l'élément de transport (6) circulant sans fin ou la surface de glissement et la courroie de transport (20) étant formé un intervalle de transport, pour enserrer et transporter les pièces d'oeuvre (2) en forme de plaques.

8. Machine pour le traitement en continu selon la revendication 7, **caractérisée en ce que**, dans la zone de l'intervalle de transport, est disposé au moins un outil d'usinage ou un groupe d'usinage.

9. Machine pour le traitement en continu selon la revendication 7 ou 8, **caractérisée en ce que** le dispositif de transport (4) présente un élément de transport guidé, au moins par tronçons, sur un coussin d'air.

10. Machine pour le traitement en continu selon la revendication 7 ou 8, **caractérisée en ce que** le dispositif de transport (4) présente un élément de transport guidé, au moins par tronçons, par des forces magnétiques.

11. Machine pour le traitement en continu selon la revendication 7 ou 8, **caractérisée en ce que** le dispositif de transport (4) présente une surface de glissement, dans laquelle sont disposées, au moins par tronçons, des ouvertures de sortie d'air, la courroie étant susceptible d'être entraînée.
